(19) Europäisches Patentamt
European Patent Office
Office européen des brevets

(11) **EP 2 557 134 A2**

(12) **EUROPEAN PATENT APPLICATION**

(43) Date of publication:
**13.02.2013 Bulletin 2013/07**

(51) Int Cl.:
*C09J 7/02* (2006.01)    *C09J 9/02* (2006.01)

(21) Application number: **12179685.8**

(22) Date of filing: **08.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.08.2011 JP 2011176786**

(71) Applicant: **Nitto Denko Corporation
Ibaraki-shi
Osaka 567-8680 (JP)**

(72) Inventors:
• **Nakao, Kota
Ibaraki-shi, Osaka 567-8680 (JP)**
• **Daigaku, Noritsugu
Ibaraki-shi, Osaka 567-8680 (JP)**
• **Buzojima, Yasushi
Ibaraki-shi, Osaka 567-8680 (JP)**
• **Yamazaki, Hiroshi
Ibaraki-shi, Osaka 567-8680 (JP)**
• **Furuta, Yoshihisa
Ibaraki-shi, Osaka 567-8680 (JP)**

(74) Representative: **Grünecker, Kinkeldey,
Stockmair & Schwanhäusser
Leopoldstrasse 4
80802 München (DE)**

(54) **Conductive adhesive tape**

(57)    A conductive adhesive tape includes a conductive layer; an adhesive layer formed at one side in the thickness direction of the conductive layer and containing an adhesive and a conductive filler; and a metal layer interposed between the conductive layer and the adhesive layer. The maximum resistance value in the first cycle measured in a heat cycle test is 0.1Ω or less, and the resistance value increase rate is 100% or less.

FIG.1

**Description**

BACKGROUND OF THE INVENTION

Field of the Invention

The present invention relates to conductive adhesive tapes.

Description of Related Art

Conventionally, a conductive adhesive tape having both conductivity and adhesiveness has been used for connection between connection terminals of various electrical devices.

For example, Japanese Utility Model Publication No. Sho 63-46980 has proposed an adhesive tape including a metal foil, and an adhesive layer provided thereon and composed of an adhesive containing conductive particles.

In Japanese Utility Model Publication No. Sho 63-46980, the adhesive layer is allowed to adhere to the connection terminal, and the conductive particles contained in the adhesive are brought into contact with the connection terminal, thereby achieving electrical continuity between the adhesive tape and the connection terminal.

SUMMARY OF THE INVENTION

In recent years, an attempt has been made to improve durability of various electrical devices, and with such an attempt, there has been a demand for a long-term conductivity retention of the conductive adhesive tape.

However, the adhesive tape of Japanese Utility Model Publication No. Sho 63-46980 is disadvantageous in that such a requirement cannot be fulfilled.

Furthermore, in the adhesive tape of Japanese Utility Model Publication No. Sho 63-46980, the metal foil may be corroded, and such corrosion may cause disadvantageous appearance.

An object of the present invention is to provide a conductive adhesive tape that has excellent appearance, and also conductivity and durability.

A conductive adhesive tape of the present invention includes a conductive layer; an adhesive layer formed at one side in the thickness direction of the conductive layer, and containing an adhesive and a conductive filler; and a metal layer interposed between the conductive layer and the adhesive layer; wherein in the heat cycle test shown below, the maximum resistance value in the first cycle is 0.1Ω or less, and the resistance value increase rate is 100% or less:

(Heat Cycle Test)

an endurance evaluation terminal substrate is made by bonding the conductive adhesive tape to a silver-plated layer having a thickness of 5 $\mu$m so that the bonded area is 6 mm$^2$,

thereafter, the endurance evaluation terminal substrate is placed in a constant temperature bath, and the resistance value of the bonded portion is measured, with a constant current of 2A supplied to the conductive adhesive tape and the silver-plated layer while a cycle as described below is repeated,

(One Cycle)

the temperature in the constant temperature bath is decreased from 25°C to -40°C to cool, and then the temperature in the constant temperature bath is kept at -40°C for 10 min,

the temperature in the constant temperature bath is increased to 85°C to heat, and

the temperature is kept at 85°C for 10 minutes, and decreased again till reaching 25°C,

the resistance value increase rate is calculated from the maximum resistance value in the 200th cycle and the maximum resistance value in the first cycle using the formula below;

$$[\text{resistance value increase rate}] = 100 \times ([\text{maximum resistance value in the 200th cycle}]-$$

$$[\text{maximum resistance value in the first cycle}])/[\text{maximum resistance value in the first cycle}].$$

In the conductive adhesive tape of the present invention, it is preferable that the metal layer has a thickness of 0.5 to 30 $\mu$m.

In the conductive adhesive tape of the present invention, it is preferable that the metal layer is a low melting point metal layer composed of a low melting point metal.

In the conductive adhesive tape of the present invention, it is preferable that the low melting point metal has a melting point of 180°C or less.

In the conductive adhesive tape of the present invention, it is preferable that the low melting point metal is a bismuth alloy having a bismuth content of 30 to 80 mass%.

In the conductive adhesive tape of the present invention, the metal layer is interposed between the conductive layer and the adhesive layer, and therefore corrosion of the conductive layer is suppressed, which leads to excellent appearance.

Furthermore, when connecting with a conduction target, affinity between the metal layer and the conductive filler can be achieved. Thus, conductivity in the adhesive layer containing the conductive filler can be improved. Thus, electrical connection between the conductive layer and the conduction target can be sufficiently ensured.

As a result, excellent appearance and conductivity can be kept for a long period of time.

BRIEF DESCRIPTION OF THE DRAWINGS

FIG. 1 shows a cross-sectional view of a conductive adhesive tape in an embodiment of the present invention.

FIG. 2 shows a cross-sectional view of a conductive adhesive tape in another embodiment (embodiment in which the conductive layer includes projected portions) of the present invention.

FIG. 3 shows a plan view of an endurance evaluation terminal substrate used in evaluation (heat cycle test) in Examples.

FIC. 4 shows a temperature profile (from the 1st cycle to the 2nd cycle) in evaluation (heat cycle test) in Examples.

DETAILED DESCRIPTION OF THE INVENTION

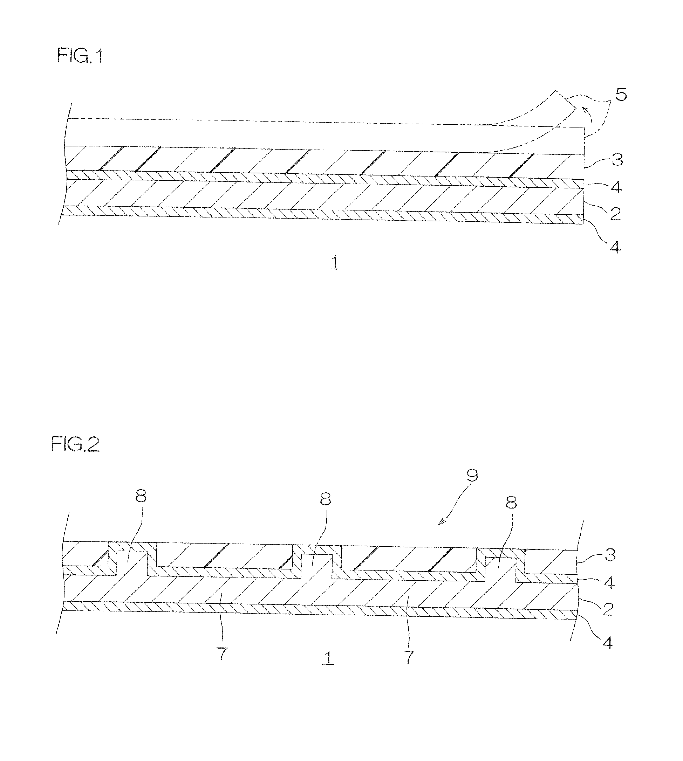

FIG. 1 shows a cross-sectional view of a conductive adhesive tape in an embodiment of the present invention.

In FIG. 1, a conductive adhesive tape 1 includes a conductive layer 2, an adhesive layer 3 formed on (one side in the thickness direction) the conductive layer 2, and a metal layer 4 interposed between the conductive layer 2 and the adhesive layer 3. The metal layer 4 is formed also on the lower face of the conductive layer 2.

The conductive layer 2 is an elongated sheet (tape) extending in the longitudinal direction.

The conductive layer 2 has a thickness of, for example, 10 to 100 $\mu$m, preferably 20 to 80 $\mu$m, and more preferably 30 to 60 $\mu$m.

Examples of conductive materials that forms the conductive layer 2 include copper, aluminum, nickel, silver, iron, lead, and alloys thereof. Of these examples, in view of conductivity, costs, and processability, copper or aluminum is preferably used, and more preferably, copper is used.

The adhesive layer 3 is formed on the entire upper face of the metal layer 4 so as to cover the entire upper face of the conductive layer 2.

The adhesive layer 3 has a thickness of, for example, 10 to 100 $\mu$m, preferably 20 to 80 $\mu$m, more preferably 25 to 60 $\mu$m.

When the thickness of the adhesive layer 3 is within the above range, affinity between the metal that forms the metal layer 4 (preferably low melting point metal (to be described later)) and the conductive filler is sufficiently ensured, and thus excellent conductivity can be given to the adhesive layer 3.

The adhesive layer 3 is formed from a conductive adhesive composition containing an adhesive and a conductive filler.

The adhesive is an adhesive component of the adhesive layer 3, and also is a matrix component in which the conductive filler is dispersed. The adhesive is not particularly limited, and examples thereof include various adhesives such as a pressure-sensitive adhesive, a thermosetting adhesive (adhesive), and a thermofusion adhesive (hot-melt adhesive). The adhesive is selected suitably from these examples of adhesives.

Examples of such adhesives include, to be specific, an acrylic adhesive (to be specific, an acrylic pressure-sensitive adhesive), a rubber adhesive, a polyolefin adhesive, an epoxy adhesive, a polyimide adhesive, a phenol adhesive, a urea adhesive, a melamine adhesive, a unsaturated polyester adhesive, a diallyl phthalate adhesive, a silicone adhesive, and a urethane adhesive.

In particular, in view of ease in bonding work, a pressure-sensitive adhesive is preferably used as the adhesive, and in view of adhesive reliability or durability, more preferably, an acrylic adhesive (acrylic pressure-sensitive adhesive) is used.

The acrylic adhesive contains, for example, an acrylic polymer as a main component.

An acrylic polymer is obtained, for example, by polymerizing a monomer containing an alkyl (meth)acrylate (alkyl methacrylate and/or alkyl acrylate) as a main component, and containing a copolymerizable monomer that is copolymerizable with the alkyl (meth)acrylate as a sub component.

Examples of alkyl (meth)acrylates include an alkyl (meth)acrylate having 1 to 10 carbon atoms in its alkyl moiety such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, and decyl (meth)acrylate.

Preferably, alkyl (meth)acrylate having 2 to 6 carbon atoms in its alkyl moiety is used, and more preferably, 2-ethylhexyl acrylate or n-butyl acrylate is used.

Alkyl (meth)acrylate may be used singly or in combination of two or more.

The mixing ratio of the alkyl (meth)acrylate relative to the total amount of the monomer is, for example, 70 to 99 mass%, and preferably 90 to 98 mass%.

Examples of copolymerizable monomers include polar group-containing monomers and polyfunctional monomers (e.g., polyalkanol polyacrylate).

Examples of polar group-containing monomers include carboxyl group-containing monomers (including acid anhydride group-containing monomers such as maleic anhydride, and itaconic acid anhydride) such as (meth)acrylic acid, itaconic acid, maleic acid, fumaric acid, and crotonic acid, and examples also include a hydroxyl group-containing monomer, an amide group-containing monomer, an amino group-containing monomer, a glycidyl group-containing monomer, a cyano group-containing monomer, a heterocyclic ring-containing vinyl monomer, an alkoxy group-containing monomer, a sulfonic acid group-containing monomer, a phosphoric acid group-containing monomer, a maleimide group-containing monomer, and an isocyanate group-containing monomer.

As the copolymerizable monomer, preferably, a polar group-containing monomer is used, more preferably, a carboxyl group-containing monomer, and even more preferably, acrylic acid is used.

The mixing ratio of the copolymerizable monomer relative to the monomers in total is, for example, 1 to 30 mass%, preferably 2 to 10 mass%

The monomers may be polymerized by a known method, and examples thereof include solution polymerization, emulsion polymerization, and bulk polymerization. Preferably, solution polymerization is used.

In solution polymerization, a known polymerization initiator, a polymerization solvent, etc. are blended in a monomer at a suitable proportion.

Examples of polymerization initiators include oil-soluble polymerization initiators such as azo polymerization initiators (to be specific, for example, 2,2'-azobisisobutyronitrile), and peroxide polymerization initiators.

Preferably, an azo polymerization initiator is used. The polymerization initiator may be used singly or in combination of two or more.

Examples of polymerization solvents include solvents such as esters (such as ethyl acetate); aromatic hydrocarbons (such as toluene); aliphatic hydrocarbons (such as n-hexane), alicyclic hydrocarbons (such as cyclohexane), and ketones (such as methyl ethyl ketone). Preferably esters, or aromatic hydrocarbons are used. The polymerization solvent may be used singly or in combination of two or more.

The above-described monomer, polymerization initiator, and polymerization solvent are blended, thereby preparing a monomer solution; and the prepared monomer solution is heated, for example, to 50 to 70°C, thereby polymerizing the monomer. An acrylic polymer is obtained in this manner.

When solution polymerization is used, an acrylic polymer is prepared as an adhesive solution. The concentration (solid content concentration) of the acrylic polymer in the adhesive solution can also be adjusted by adding a solvent (concentration adjustment solvent) to the prepared adhesive solution.

The conductive filler is particles (conductive particles) that add conductivity to the adhesive layer 3, and examples of such conductive particles include metal particles such as nickel particles, iron particles, chromium particles, cobalt particles, aluminum particles, antimony particles, molybdenum particles, copper particles, silver particles, platinum particles, and gold particles; particles of alloys or oxides of these metal particles; carbon particles such as carbon black; and covered particles such as polymer beads (resin particles) covered with the above described metals, alloys and/or oxides.

Preferably, the metal particles are used, and in view of conduction reliability for a long period of time, more preferably, silver particles are used.

The shape of the conductive filler is not particularly limited, and examples thereof include spherical, plate-like (scale-like), spike-like, filament-like, and flake-like shapes. In view of durability, spherical or plate-like shape is preferable, and spherical shape is more preferable.

When the conductive filler is spherical, the conductive filler is easily dispersed homogeneously in the adhesive, and therefore conductivity and adhesiveness of the conductive adhesive tape 1 can be both achieved easily.

The average value (when spherical, the average particle size) of the maximum length of the conductive filler is, for example, 0.1 to 100 μm, preferably 1 to 50 μm.

The average particle size is calculated as 50% particle size (D50, median size).

When the conductive filler is spherical, 95% particle size (D95) of the conductive filler is, for example, 1 to 200

μm, preferably 10 to 100 μm.

The average value (including D50 and D95) of the maximum length above is measured, for example, by Microtrac (manufactured by Nikkiso Co., Ltd.).

As the conductive filler, a commercially available product may be used.

The conductive filler content relative to 100 parts by mass of the adhesive is, for example, 25 to 250 parts by mass, preferably 30 to 150 parts by mass, more preferably 35 to 100 parts by mass.

By setting the conductive filler content within the above range, coagulation of the conductive filler is suppressed, overly rough surface (including the upper face) of the adhesive layer 3 is prevented, and conduction reliability for a long time and adhesiveness can be both achieved. Furthermore, production costs can be reduced.

To prepare the conductive adhesive composition, for example, the concentration adjustment solvent described above is added to the adhesive, thereby preparing an adhesive solution. The adhesive concentration (solid content concentration) in the adhesive solution is, for example, 1 to 80 mass%, preferably 10 to 50 mass%.

Thereafter, the prepared adhesive solution and the conductive filler are blended.

The conductive adhesive composition is prepared in this manner.

When the adhesive is prepared as an adhesive solution by solution polymerization, the polymerization solvent can also be used as the concentration adjustment solvent, or separately, a concentration adjustment solvent can be further added to the polymerization solvent.

To the conductive adhesive composition and the adhesive solution, as necessary, known additives such as a cross-linking agent, a tackifying resin, and further a cross-linking accelerator, an antioxidant, a filler, a coloring agent, a ultraviolet absorber, an oxidation inhibitor, a plasticizer, a softener, a surfactant, and an antistatic agent can be added at a suitable ratio.

The cross-linking agent is added as necessary to allow cross-linking of the adhesive, in order to improve cohesive force of the conductive adhesive composition.

Examples of cross-linking agents include isocyanate cross-linking agents (e.g., trimethylolpropane adduct of tolylene diisocyanate), epoxy cross-linking agents, and melamine cross-linking agents. Preferably, the isocyanate cross-linking agent is used.

The tackifier is blended as necessary to improve adhesiveness of the conductive adhesive composition, and examples thereof include rosin ester.

The metal layer 4 is formed between at least the conductive layer 2 and the adhesive layer 3. To be specific, the metal layer 4 is formed between the entire upper face of the conductive layer 2 and the entire lower face of the adhesive layer 3. In this manner, the metal layer 4 is sandwiched between the conductive layer 2 and the adhesive layer 3 in the thickness direction.

The metal layer 4 is formed also on the lower face (the other side in the thickness direction, the face opposite to the face where the adhesive layer 3 is formed, that is, rear face) of the conductive layer 2.

That is, in the embodiment of FIG. 1, the metal layer 4 is formed on both of the upper face and the lower face of the conductive layer 2.

The metal layer 4 has a thickness of, for example, 0.5 to 30 μm, preferably 3 to 20 μm.

When the thickness of the metal layer 4 is more than the above range, and when the metal layer 4 is composed of a low melting point metal (described later), the amount of the low melting point metal to be melted is excessive, and adhesiveness of the adhesive layer 3 may be decreased.

On the other hand, when the thickness of the metal layer 4 is below the above range, and when the metal layer 4 is composed of a low melting point metal (described later), the amount of the low melting point metal to be melted is significantly small, and conductivity and long-term reliability of the adhesive layer 3 may not be improved.

Examples of metals that form the metal layer 4 include zinc, nickel, tin, chromium, gold, silver, bismuth, indium, and alloys (including solder) thereof.

In view of ensuring long term reliability, preferably, the metal that forms the metal layer 4 is a low melting point metal. In such a case, the metal layer 4 is a low melting point metal layer.

Examples of the low melting point metal include an alloy of at least two metals selected from tin, bismuth, and indium. Specific examples of the low melting point metal include tin alloys containing tin such as a tin-bismuth alloy and a tin-indium alloy; and more preferably, bismuth alloys such as a tin-bismuth alloy is used.

The bismuth content in the bismuth alloy is, for example, 30 to 80 mass%, preferably 45 to 70 mass%.

When the bismuth content in the bismuth alloy is outside the above range, the melting point of the metal layer 4 may become high.

When the bismuth content is more than the above range, in addition to the above case, furthermore, the low melting point metal may become brittle, and may cause fracture (cracks) in the low melting point metal layer.

The indium content in the indium alloy such as a tin-indium alloy is, for example, 40 to 65 mass%.

The melting point of the low melting point metal is lower than the melting point of the metals (elements of tin, bismuth, indium, etc.) that form the alloy, and to be specific, for example, 180°C or less, preferably 110 to 180°C, and more preferably 120 to 150°C. The melting point of the low melting point metal is measured by DSC (differential scanning calorimetry).

When the melting point of the low melting point metal is more than the above temperature, the low temperature heating at the time of bonding the adhesive layer 3 and the conduction target does not cause melting of the low melting point metal, and thus the bonding of the conductive layer 2 to the conduction target with the metal layer 4 interposed therebetween may become difficult.

To obtain the conductive adhesive tape 1, first, a conductive layer 2 is prepared, and then on the upper face and lower face of the prepared conductive layer 2, for example, a metal layer 4 is formed by, for example, a film-forming method such as plating, vapor deposition, welding, coating, or thermal spraying.

Thereafter, on the upper face of the metal layer 4 formed on the upper face of the conductive layer 2, an adhesive layer 3 is formed.

To form the adhesive layer 3, for example, the conductive adhesive composition (when a solvent is blended, a solution of conductive adhesive composition) described above is applied on the surface of a known release sheet 5 (see the phantom line in FIG. 1), and thereafter, as necessary, the solvent is removed by heating, thereby forming the adhesive layer 3 on the surface of the release sheet 5. Thereafter, the adhesive layer 3 is transferred on the upper face of the metal layer 4. The surface of the release sheet 5 has been treated, for example, with silicone.

Alternatively, the adhesive layer 3 can also be formed by directly applying the conductive adhesive composition described above on the upper face of the metal layer 4 described above, and thereafter, removing the solvent.

Thereafter, when the cross-linking agent is blended in the adhesive layer 3, crosslinking reaction is performed by aging.

The adhesive layer 3 is formed in this manner.

In the conductive adhesive tape 1 thus formed, the maximum resistance value in the first cycle measured in a heat cycle test is $0.1\Omega$ or less, and the resistance value increase rate defined below is 100% or less.

When the maximum resistance value in the first cycle is the upper limit or less, sufficient electrical conductivity can be brought out.

The resistance value increase rate is an indicator of how stable the achieved electrical conductivity is, when the conductive adhesive tape 1 is used for a long period of time or used under harsh environment. When the resistance value increase rate is the upper limit or less, stable and continuous electrical conduction is possible, and a product in which the conductive adhesive tape 1 is used can bring out high reliability. On the other hand, when the resistance value increase rate is more than the upper limit, use for a long period of time, or use under conditions of harsh environment may cause a rapid increase in the resistance value, which may cause conduction failure, and decrease reliability in the product.

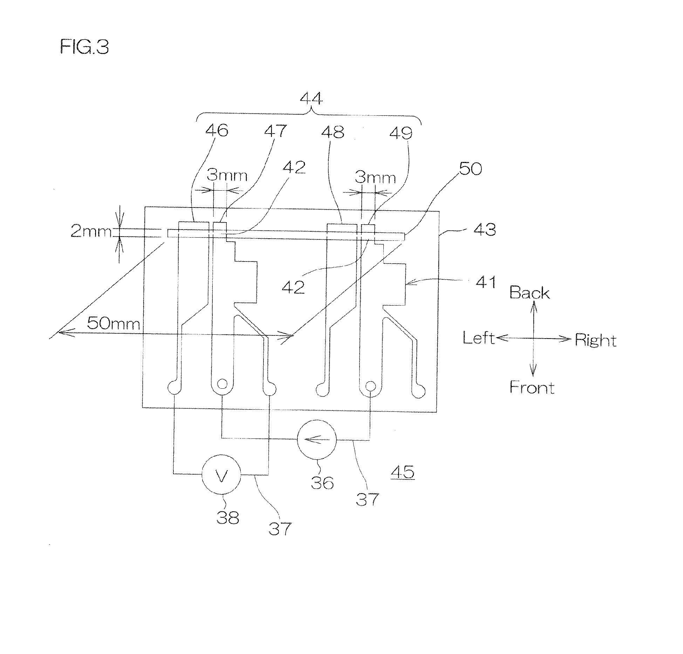

Next, a heat cycle test of the conductive adhesive tape 1 is described with reference to FIG. 3.

In the heat cycle test, using an evaluation substrate (endurance evaluation terminal substrate) 45 having an electric circuit formed by bonding a conductive adhesive tape 50 to a conductive pattern 41 where the silver-plated layer is formed, a constant current is supplied to the electric circuit, and the endurance evaluation terminal substrate 45 is exposed under temperature atmosphere conditions under which a low temperature and a high temperature is switched periodically. The resistance between the conductive adhesive tape 1 and the silver-plated layer (that is, the contact resistance of the bonded portion 42 of the conductive adhesive tape 50 and the conductive pattern 41 where the silver-plated layer is formed) is measured.

As the endurance evaluation terminal substrate 45, as shown in FIG. 3, a glass epoxy substrate (substrate for endurance evaluation, hereinafter also referred to as "endurance evaluation terminal substrate") 45 in which a conductive pattern (in the following, also referred to as "terminal") 41 on the surface of which a silver-plated layer (thickness 5 $\mu$m. Not shown in FIG. 3) is formed is used, and the endurance evaluation terminal substrate 45 is made by bonding the conductive adhesive tape 50 to the conductive pattern 41, and further connecting the constant current power source 36 and an electrometer 38 to the conductive pattern 41 using wires 37 to form the electric circuit.

To be specific, the endurance evaluation terminal substrate 45 includes a substrate 43 composed of a glass-epoxy resin, and a terminal 44 formed thereon into a predetermined pattern. Four terminals 44 are provided with a space provided therebetween in left-right directions, and the respective terminals 44 (a first terminal 46, a second terminal 47, a third terminal 48, and a fourth terminal 49) extend in front-back directions. The first terminal 46, second terminal 47, third terminal 48, and fourth terminal 49 are disposed sequentially from the left side to the right side.

Then, the conductive adhesive tape 50 is cut out into a size of 2 mm $\times$ 50 mm, and the conductive adhesive tape 50 is bonded, as shown in FIG. 3, to the rear-end portion of the terminals 44.

The width (length in left-right directions) of the rear-end portion of the second terminal 47 and the fourth terminal 49 is 3 mm, and the width (length in front-back directions in FIG. 3) of the conductive adhesive tape 50 is 2 mm, and therefore the bonded area of the rear-end portion of the second terminal 47 and the conductive adhesive tape 50, and the bonded area of the rear-end portion of the fourth terminal 49 and the conductive adhesive tape 50 are both 6 mm$^2$ (=3 mm $\times$ 2 mm).

Furthermore, the front-end portions of the second terminal 47 and the fourth terminal 49, and the constant current power source 36 are connected with the wire 37, and the front-end portions of the first terminal 46 and the second terminal 47 are connected to the electrometer 38 with the wire 37, thereby forming an electric circuit.

The endurance evaluation terminal substrate 45 is formed in this manner.

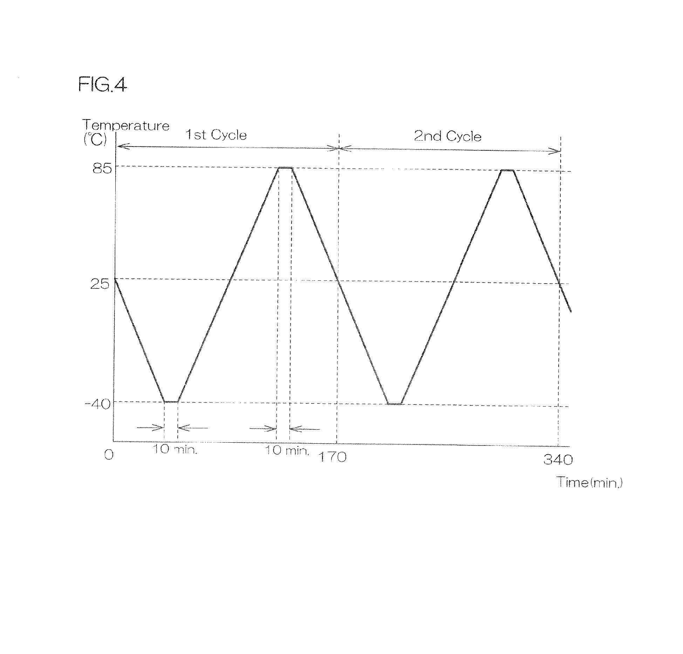

Then, a heat cycle test is conducted on the endurance evaluation terminal substrate 45 under the endurance (heat cycle) conditions shown in FIG. 4: that is, a chamber (constant temperature bath) is used; and under heat cycle conditions of switching back and forth between - 40°C and 85°C to a total of 200 times, a constant current of 2A is supplied to the electric circuit.

To be specific, a cycle as described below is repeated at least 200 times:

One cycle

While supplying a constant current of 2A from the constant current power source 36 to the conductive pattern 41, the starting temperature of the chamber is set to 25°C. The temperature is decreased from 25°C at a speed of 100°C/hour until the temperature reached -40°C, and the temperature is kept at -40°C for 10 min. Then, the temperature in the chamber is increased from -40°C to 85°C at a speed of 100°C/hour, and the temperature is kept at 85°C for 10 minutes. Thereafter, the temperature is decreased again at a speed of 100°C/hour, until the temperature reached 25°C. One cycle takes 170 minutes. FIG. 4 shows the profile up to the second cycle with the above described chamber temperature settings (heat cycle conditions). The temperature settings (heat cycle conditions) are in accordance with IEC61215 (second ed.) and IEC61646 (second ed.) of International Electrotechnical Commission.

As the chamber (constant temperature bath), a known common use chamber can be used, and is not particularly limited. For example, a commercially available product such as "PL-3KP (trade name)" (manufactured by ESPEC CORP.), or "PWL-3KP(trade name)"(manufactured by ESPEC CORP.) can be used.

Furthermore, in the electric circuit to which a constant current of 2A is supplied, during the heat cycle test, a voltage is measured periodically with the electrometer 38, with, for example, sampling period : 5 to 10 times/10 minutes. In this manner, the resistance value of the bonded portion 42 is obtained periodically, and from the obtained resistance values, the maximum value (initial resistance value) of the resistance value in the first cycle, and the maximum value of the resistance value in the 200th cycle are measured, and the resistance value increase rate is calculated using the formula below.

$$[\text{resistance value increase rate}] = 100 \times ([\text{maximum resistance value in the 200th cycle}]-$$

$$[\text{maximum resistance value in the first cycle}])/[\text{maximum resistance value in the first cycle}]$$

The maximum resistance value in the first cycle is preferably 0.0001 to 0.1Ω, more preferably 0.003 to 0.1Ω.

The resistance value increase rate is preferably 80% or less.

The conductive adhesive tape 1 is used for electrical conduction between conduction targets disposed with a space provided therebetween. To be more specific, for example, grounding of printed wiring boards, grounding of exterior shield cases of an electronic device, grounding for static electricity prevention, and internal wirings for power source devices or electronic devices (for example, display devices such as liquid crystal display devices, organic EL (electroluminescence) display devices, PDPs (plasma display panel), and electronic papers; solar batteries, etc.).

Next, to allow electrical conduction between conduction targets using this conductive adhesive tape 1, first, as shown with the phantom line of FIG. 1, the release sheet 5 is removed from the adhesive layer 3, and then the adhesive layer 3 of the conductive adhesive tape 1 is bonded (pressure-bonded) to an adherent.

Thereafter, the conductive adhesive tape 1 is heated to, for example, when the metal layer 4 is composed of a low melting point metal layer, a temperature of the melting point or more of the low melting point metal. The heating temperature is, for example, 110 to 180°C.

The low melting point metal of the metal layer 4 is thus melted, and affinity between the metal layer 4 and the conductive filler of the adhesive layer 3 achieved, and at the same time, the conduction targets are bonded to the adhesive layer 3. Then, the conduction targets are electrically connected through the adhesive layer 3 and the conductive layer 2, thereby achieving electrical continuity.

With this conductive adhesive tape 1, by heating the conductive adhesive tape 1 at a low temperature when connecting with the conduction target, the metal layer 4 can be melted, thereby achieving affinity between the metal layer 4 and the conductive filler. Thus, conductivity in the adhesive layer 3 containing the conductive filler can be improved.

Therefore, electrical connection between the conductive layer 2 and the conduction target can be ensured.

As a result, conductivity can be kept for a long period of time.

In particular, when the metal layer 4 is a low melting point metal layer composed of a low melting point metal, by heating the conductive adhesive tape 1 at a low temperature when connecting with a conduction target, the low melting point metal layer 4 can be melted, and affinity between the low melting point metal layer 4 and the conductive filler can be achieved. Thus, conductivity of the adhesive layer 3 containing the conductive filler can be improved.

Therefore, the conductive layer 2 and the conduction target can be electrically connected further reliably.

As a result, conductivity can be further kept for a longer period of time.

In the embodiment of FIG. 1, the metal layer 4 is formed on both sides of the conductive layer 2, i.e., the upper face and the lower face thereof, (both sides in the thickness direction). Although not shown, for example, the metal layer 4 can be formed only on the upper face (one side in the thickness direction) of the conductive layer 2.

FIG. 2 is a cross-sectional view of a conductive adhesive tape in another embodiment (embodiment in which the conductive layer includes a projected portion) of the present invention. Those members corresponding to the above described components are given the same reference numbers in FIG. 2, and detailed descriptions thereof are omitted.

Although the adhesive layer 3 is formed on the entire upper face of the metal layer 4 in the embodiment of FIG. 1, for example, as shown in FIG. 2, the adhesive layer 3 can be formed on a portion of the upper face of the metal layer 4.

In FIG. 2, the conductive layer 2 integrally includes, in cross section, a flat portion 7 having a generally rectangular shape elongated in the longitudinal direction, and projected portions 8 projected upward from the flat portion 7.

The projected portion 8 is formed into a generally circular shape or a generally rectangular shape in plan view, and arranged in arrays in a spaced apart relationship in the longitudinal direction and the width direction (direction perpendicular to the width direction).

The metal layer 4 is formed continuously on the upper face of the flat portion 7, and the upper face and the side face of the projected portion 8.

The adhesive layer 3 allows the metal layer 4 formed on the upper face of the projected portion 8 to expose, and is formed so as to cover the metal layer 4 formed on the upper face of the flat portion 7.

The conductive adhesive tape 1 shown in FIG. 2 as well is capable of achieving the same functions and effects as those of the conductive adhesive tape 1 of FIG. 1.

Examples

While the present invention is described in more detail in the following using Examples and Comparative Examples, such is for illustrative purpose only and it is not to be construed restrictively.

Example 1

70 parts by mass of 2-ethylhexyl acrylate, 30 parts by mass of n-butyl acrylate, and 3 parts by mass of acrylic acid were blended, thereby preparing a monomer mixture, and the mixture was fed to a separable flask.

Then, relative to 100 parts by mass of the prepared monomer mixture, 0.2 parts by mass of 2,2'-azobisisobutyronitrile as a polymerization initiator, and 186 parts by mass of ethyl acetate as a polymerization solvent were fed to the separable flask, thereby preparing a monomer solution, and the monomer solution was stirred for 1 hour while introducing nitrogen gas. After removing oxygen in the polymerization system, the temperature of the monomer solution was increased to 63°C. After the monomer solution was allowed to react for 10 hours, toluene as a concentration adjustment solvent was further added, thereby producing an acrylic polymer solution having a solid content concentration of 30 mass%. The weight-average molecular weight of the acrylic polymer in the acrylic polymer solution was, in accordance with GPC measurement, using the polystyrene standard calibration value, about 520000.

Thereafter, to the acrylic polymer solution, relative to 100 parts by mass of acrylic polymer, 2 parts by mass of "CORONATER L" (isocyanate cross-linking agent, manufactured by Nippon Polyurethane Industry Co., Ltd.) as a cross-linking agent, and 30 parts by mass of polymerized rosin pentaerythritolester (manufactured by Arakawa Chemical Industries, Ltd. "PENSEL D-125") as a tackifying resin were blended, thereby preparing a solution (solid content concentration 46.8 mass%) of acrylic adhesive composition.

Thereafter, relative to 100 parts by mass of the solid content of the solution of acrylic adhesive composition, 35 parts by mass of "Ag-HWQ-400" (spherical silver particles, D50: 13.2 $\mu$m, D95: 43.0 $\mu$m, manufactured by FUKUDA METAL FOIL & POWDER Co., LTD.) was blended as a conductive filler, and the mixture was stirred with a mixer for 10 minutes, thereby preparing a conductive adhesive composition.

The conductive adhesive composition obtained above was applied by casting on a release sheet ("110EPS (P) blue", manufactured by Oji paper Co., Ltd.) having a thickness of 163 $\mu$m so that the thickness after drying was 20 $\mu$m, and the conductive adhesive composition was heat-dried under normal pressure at 120°C for 5 minutes, thereby forming an adhesive layer.

Separately, an elongated, copper-made conductive layer having a thickness of 35 $\mu$m was prepared, and then a metal layer (low melting point metal layer) composed of a tin-bismuth alloy (bismuth content 57$\pm$5 mass%, melting point 139°C) having a thickness of 12 $\mu$m was laminated on the front face (upper face) and back face (lower face) of the conductive layer by plating, thereby producing a laminate.

Then, on the upper face (one side) of the formed adhesive layer, the prepared laminate was bonded, and aged at 40°C for 1 day. Thereafter, the adhesive layer with the laminate was cut to give a width of 2 mm, thereby producing a conductive adhesive tape.

Example 2

A conductive adhesive tape was obtained in the same manner as in Example 1, except that the blending amount of the conductive filler was changed to 70 parts by mass, and the thickness of the adhesive layer was changed to 30 $\mu$m.

Example 3

A conductive adhesive tape was obtained in the same manner as in Example 1, except that in the production of the laminate, a metal layer composed of tin (melting point 232°C) having a thickness of 1 $\mu$m was laminated by plating.

Comparative Example 1

A conductive adhesive tape was obtained in the same manner as in Example 1, except that in the production of a laminate, the metal layer (low melting point metal layer) was not laminated, and the thickness of the adhesive layer was changed to 28 $\mu$m.

(Evaluation)

1. Heat Cycle Test

As shown in FIG. 3, an endurance evaluation terminal substrate 45 was prepared.

The terminal substrate 45 includes a substrate 43 composed of a glass-epoxy resin, and a terminal 44 formed thereon into a predetermined pattern. A silver-plated layer having a thickness of 5 $\mu$m is formed on the surface of the terminal 44. Four terminals 44 are provided with a space provided therebetween in left-right directions, and the terminals 44 (a first terminal 46, a second terminal 47, a third terminal 48, and a fourth terminal 49) extend in front-back directions. The first terminal 46, the second terminal 47, the third terminal 48, and the fourth terminal 49 are disposed sequentially from the left side toward the right side.

Separately, the conductive adhesive tapes obtained in Examples 1 to 3 were cut out into a size of 2 mm × 50 mm, and the release sheet was released, thereby producing an endurance evaluation terminal substrate 50.

The width (length in left-right directions) of the rear-end portion of the second terminal 47 and the fourth terminal 49 was 3 mm, and the width (length in front-back directions in FIG. 3) of the conductive adhesive tape 50 was 2 mm, and therefore the bonded area of the rear-end portion of the second terminal 47 and the conductive adhesive tape 50, and the bonded area of the rear-end portion of the fourth terminal 49 and the conductive adhesive tape 50 were both 6 mm$^2$ ( = 3 mm × 2 mm).

Also, the front end portions of the second terminal 47 and the fourth terminal 49, and a constant-current power source 36 were connected via a wiring 37, and the front end portions of the first terminal 46 and the second terminal 47, and an electrometer 38 were connected via a wiring 37, thereby forming an electric circuit.

The endurance evaluation terminal substrate was made in this manner.

An electric current of 2A was supplied to the electric circuit of the endurance evaluation terminal substrate, and the resistance value of the endurance evaluation terminal substrate was measured.

Then, with the conditions of endurance (heat cycle) shown in FIG. 4, that is, a heat cycle condition of switching back and forth between -40°C and 85°C to a total of 200 times, a heat cycle test was conducted on the endurance evaluation terminal substrate. Then, the maximum resistance value in the first cycle (initial resistance value), the maximum resistance value in the 200th cycle, and the resistance value increase rate were obtained.

The results are shown in Table 1.

2. Appearance Observation

Appearance of the conductive adhesive tape after the durability test was observed visually, and evaluated based on the following criteria.

<Criteria>

Good: It was confirmed that no change was found on the conductive layer of the conductive adhesive tape.

Bad: It was confirmed that corrosion or discoloration was found in the conductive layer of the conductive adhesive tape.

The results are shown in Table 1.

## Table 1

| Example · Comp. Ex. | | | | Example 1 | Example 2 | Example 3 | Comp. Ex. 1 |
|---|---|---|---|---|---|---|---|
| Conductive Adhesive tape | Conductive Layer | Type | | Cu | Cu | Cu | Cu |
| | | Thickness | (μm) | 35 | 35 | 35 | 35 |
| | Adhesive Layer | Adhesive | Type | Acrylic Polymer | Acrylic Polymer | Acrylic Polymer | Acrylic Polymer |
| | | | Thickness (μm) | 20 | 30 | 30 | 28 |
| | | | Parts by Mass | 100 | 100 | 100 | 100 |
| | | Conductive Filler | Type | Silver Particles | Silver Particles | Silver Particles | Silver Particles |
| | | | D50(μm) | 13.2 | 13.2 | 13.2 | 13.2 |
| | | | D95(μm) | 43 | 43 | 43 | 43 |
| | | | Shape | Spherical | Spherical | Spherical | Spherical |
| | | | Parts by Mass | 35 | 70 | 70 | 70 |
| | | Thickness | (μm) | 20 | 30 | 30 | 30 |
| | Metal Layer | Type | | Sn-Bi Alloy | Sn-Bi Alloy | tin | — |
| | | Bi content | (wt%) | 57±5 | 57±5 | — | |
| | | Melting Point | (°C) | 139 | 139 | 232 | |
| | | Thickness | (μm) | 12 | 12 | 1 | |
| Evaluation | Heat Cycle Test | 1st Cycle Resistance Value(Ω) | | 0.005 | 0.004 | 0.004 | — |
| | | 200th Cycle Resistance Value(Ω) | | 0.006 | 0.006 | 0.006 | |
| | | Resistance Value Increase Rate(%) | | 20 | 50 | 50 | |
| | Appearance Observation (Conductive Layer) | | | Good | Good | Good | Bad |

## Claims

1. A conductive adhesive tape comprising:

   a conductive layer;
   an adhesive layer formed at one side in the thickness direction of the conductive layer, and containing an adhesive and a conductive filler, and

a metal layer interposed between the conductive layer and the adhesive layer,

wherein in the heat cycle test shown below, the maximum resistance value in the first cycle is 0.1Ω or less, and the resistance value increase rate described below is 100% or less: (Heat Cycle Test)

an endurance evaluation terminal substrate is made by bonding the conductive adhesive tape to a silver-plated layer having a thickness of 5 $\mu$m so that the bonded area is 6 mm$^2$;

thereafter, the endurance evaluation terminal substrate is placed in a constant temperature bath, and the resistance value of the bonded portion is measured, with a constant current of 2A supplied to the conductive adhesive tape and the silver-plated layer while a cycle as described below is repeated,

(One Cycle)

the temperature in the constant temperature bath is decreased from 25°C to -40°C to cool, and then the temperature in the constant temperature bath is kept at -40°C for 10 min, and

the temperature in the constant temperature bath is increased to 85°C to heat, and

the temperature is kept at 85°C for 10 minutes, and decreased again till reaching 25°C;

the resistance value increase rate is calculated from the maximum resistance value in the 200th cycle and the maximum resistance value in the first cycle using the formula below; [resistance value increase rate] = 100 × ([maximum resistance value in the 200th cycle]-[maximum resistance value in the first cycle])/[maximum resistance value in the first cycle].

2. The conductive adhesive tape according to Claim 1, wherein the metal layer has a thickness of 0.5 to 30 $\mu$m.

3. The conductive adhesive tape according to Claim 1 or 2, wherein the metal layer is a low melting point metal layer comprising a low melting point metal.

4. The conductive adhesive tape according to Claim 3, wherein the low melting point metal has a melting point of 180°C or less.

5. The conductive adhesive tape according to Claim 3 or 4, wherein the low melting point metal is a bismuth alloy having a bismuth content of 30 to 80 mass%.

FIG.1

1

FIG.2

1

FIG.3

FIG.4

**REFERENCES CITED IN THE DESCRIPTION**

**Patent documents cited in the description**

• JP SHO6346980 B